# EUROPÄISCHE PATENTSCHRIFT

(11) **EP 2 044 092 B1**
(45) Veröffentlichungstag und Bekanntmachung des Hinweises auf die Patenterteilung: **28.09.2011**
(21) Anmeldenummer: 07787009.5
(22) Anmeldetag: 03.07.2007
(51) Int. Cl.: C07F 9/48

(54) **VERFAHREN ZUR HERSTELLUNG VON HALOGENE ENTHALTENDEN ORGANISCHEN PHOSPHORVERBINDUNGEN**
METHOD FOR PRODUCING ORGANIC PHOSPHOROUS COMPOUNDS CONTAINING HALOGENE
PROCÉDÉ DE PRODUCTION DE COMPOSÉS PHOSPHORE ORGANIQUES HALOGÉNÉS

(30) Priorität: 12.07.2006 EP 06117037
(43) Veröffentlichungstag der Anmeldung: 08.04.2009
(73) Patentinhaber: BASF SE, 67056 Ludwigshafen (DE)
(72) Erfinder: BAUMANN, Robert, 68159 Mannheim (DE); AECHTNER, Tobias, 68165 Mannheim (DE); SIEGEL, Wolfgang, 67117 Limburgerhof (DE); LUYKEN, Hermann, 67069 Ludwigshafen (DE); PFAB, Peter, 67433 Neustadt (DE); SCHEIDEL, Jens, 69493 Hirschberg (DE); LEITNER, Andreas, 67071 Ludwigshafen (DE); GLASS, Andreas, 67245 Lambsheim (DE)
(86) Internationale Anmeldenummer: PCT/EP2007/056685
(87) Internationale Veröffentlichungsnummer: WO 2008/006735

(56) Entgegenhaltungen:
- WO-A-01/32666
- WO-A-03/062251
- PASTOR, STEPHEN D. ET AL: "Sterically hindered phosphonites" PHOSPHORUS AND SULFUR AND THE RELATED ELEMENTS , 22(2), 169-76 CODEN: PREEDF; ISSN: 0308-664X, 1985, XP008014331
- HERBERICH, GERHARD E. ET AL: "1,1'-Bis(methylphenylphosphinyl)ferrocene : synthesis and complexes with the tetracarbonylchromium fragment" CHEMISCHE BERICHTE , 128(7), 689-93 CODEN: CHBEAM; ISSN: 0009-2940, 1995, XP002449757

## Beschreibung

Die vorliegende Erfindung betrifft ein verbessertes Verfahren zur Herstellung von Halogene enthaltenden organischen Phosphorverbindungen der Formel

XPR²(OR¹) Ia,

in der X Halogene und R¹ und R² organische Reste bedeuten.

Es ist aus WO 01/32 666 A1 (DE 199 53 048) bekannt, dass man Halogene enthaltende organische Phosphorverbindungen der Formeln

X₍₁₋ₐ₎ R²ₐ P(OR¹)₂ I

oder

X₍₂₋ₐ₎ R²a P(OR¹) II,

in denen X ein Halogen, R1 und R2 organische Reste und a die Werte 0 oder 1 bedeuten kann, dadurch herstellen kann, dass man eine Verbindung der Formel

X(₃₋ₐ) R²ₐ P III

mit einer Verbindung der Formel

R¹ OH IV

bei 10 bis 200 °C und Normaldruck umsetzt. Dabei entsteht eine Mischung V, die die Verbindungen I und II enthält. Man trennt die Verbindungen I und II voneinander. Stellt Verbindung I das Zielprodukt dar, führt man Verbindung II in den Syntheseschritt zurück. Im Falle von Verbindung II als Zielprodukt, wird Verbindung I zurückgeführt.

Nachteilig bei der Herstellung von Verbindungen II mit a = 1 aus Verbindungen III mit a = 1 ist, dass der Reaktionspartner R¹OH beim Arbeiten bei Normaldruck nicht vollständig umgesetzt wird. Arbeitet man die Reaktionsausträge destillativ auf, um die Zielprodukte zu isolieren, so reagieren die nicht umgesetzten, Halogen enthaltenden organischen Phosphorverbindungen II (a = 1) mit den Verbindungen R¹OH unter Chlorwasserstoffbildung und vermehren die Menge an Produkt, das zurückgeführt werden muss. Außerdem muss das Zielprodukt II von Chlorwasserstoff gereinigt werden.

Die Aufgaben der vorliegenden Erfindung bestand darin, diese Nachteile zu vermeiden. Dabei sollte eine möglichst hohe Ausbeute an dem Zielprodukt Ia erzielt, die Menge an rückzuführendem Produkt Ib minimiert, die Aufarbeitung des Reaktionsaustrags und die Rückführung der Produkte Ib vereinfacht werden.

Diese Aufgaben werden gelöst in einem Verfahren zur Herstellung von Verbindungen der allgemeinen Formeln

XPR²(OR¹) la

wobei X Chlor, Brom oder Jod und R¹ einen C₁- bis C₁₈-Alkylrest, der gegebenenfalls C₁- bis C₈-Alkoxy, 1- oder 2-Naphthyloxy, Phenyloxy, Diamino, Mercapto oder Halogen trägt kann, sowie Alkylreste mit mindestens 2 Kohlenstoffatomen, in denen gegebenenfalls ein Kohlenstoffatom durch Sauerstoff, Stickstoff oder Schwefel ersetzt ist oder Alkylreste mit mindestens 4 Kohlenstoffatomen, in denen gegebenenfalls ein oder zwei Kohlenstoffatome durch ein oder zwei gleiche oder unterschiedliche Atome aus der Gruppe Sauerstoff, Stickstoff oder Schwefel ersetzt sind oder einen C₃- bis C₁₂-Cycloalkylrest, der gegebenenfalls lineare oder weitere cyclische Alkylreste oder aromatische Reste und die Alkylreste cyclische Alkylreste oder aromatische Reste als Substituenten tragen oder aromatische Reste aus der Gruppe der Heterocyclen und Homocyclen, die gegebenenfalls durch C₁- bis C₁₈-Alkylreste, die gegebenenfalls C₁- bis C₈-Alkoxy, 1- oder 2-Naphthyloxy, Phenyloxy, Diamino, Mercapto oder Halogen tragen, sowie Alkylreste mit mindestens 2 Kohlenstoffatomen, in denen gegebenenfalls ein Kohlenstoffatom durch Sauerstoff, Stickstoff oder Schwefel ersetzt ist oder Alkylreste mit mindestens 4 Kohlenstoffatomen, in denen gegebenenfalls ein oder zwei Kohlenstoffatome durch ein oder zwei gleiche oder unterschiedliche Atome aus der Gruppe Sauerstoff, Stickstoff oder Schwefel ersetzt sind oder C₃- bis C₁₂-Cycloalkylreste, die gegebenenfalls lineare oder weitere cyclische Alkylreste oder aromatische Reste und die Alkylreste cyclische Alkylreste oder aromatische Reste als Substituenten tragen, C₁- bis C₈-Alkoxy oder aromatische Substituenten, die gegebenenfalls durch C₁- bis C₁₈-Alkylreste, die gegebenenfalls C₁- bis C₈-Alkoxy, 1- oder 2-Naphthyloxy, Phenyloxy, Diamino, Mercapto oder Halogen tragen, sowie Alkylreste mit mindestens 2 Kohlenstoffatomen, in denen gegebenenfalls ein Kohlenstoffatom durch Sauerstoff, Stickstoff oder Schwefel ersetzt ist oder Alkylreste mit mindestens 4 Kohlenstoffatomen, in denen gegebenenfalls ein oder zwei Kohlenstoffatome durch ein oder zwei gleiche oder unterschiedliche Atome aus der Gruppe Sauerstoff, Stickstoff oder Schwefel ersetzt sind oder C₃- bis C₁₂-Cycloalkylreste, die gegebenenfalls lineare oder weitere cyclische Alkylreste oder aromatische Reste und die Alkylreste cyclische Alkylreste oder aromatische Reste als Substituenten tragen, die gegebenenfalls durch C₁- bis C₈-Alkoxy, 1- oder 2-Naphthyloxy, Phenyloxy, Diamino, Mercapto oder Halogen substituiert sind, bedeutet, durch Umsetzung von Verbindungen der allgemeinen Formel

X₂PR² II,

in der X die oben genannte Bedeutung besitzt und R² einen C₁- bis C₁₈-Alkylrest, der gegebenenfalls C₁- bis C₈-Alkoxy, 1- oder 2-Naphthyloxy, Phenyloxy, Diamino, Mercapto oder Halogen trägt kann, sowie Alkylreste mit mindestens 2 Kohlenstoffatomen, in denen gegebenenfalls ein Kohlenstoffatom durch Sauerstoff, Stickstoff oder Schwefel ersetzt ist oder Alkylreste mit mindestens 4 Kohlenstoffatomen, in denen gegebenenfalls ein oder zwei Kohlenstoffatome durch ein oder zwei gleiche oder unterschiedliche Atome aus der Gruppe Sauerstoff, Stickstoff oder Schwefel ersetzt sind oder einen C₃- bis C₁₂-Cycloalkylrest, der gegebenenfalls lineare oder weitere cyclische Alkylreste oder aromatische Reste und die Alkylreste cyclische Alkylreste oder aromatische Reste als Substituenten tragen oder aromatische Reste aus der Gruppe der Heterocyclen und Homocyclen, die gegebenenfalls durch C₁- bis C₁₈-Alkylreste, die gegebenenfalls C₁- bis C₈-Alkoxy, 1- oder 2-Naphthyloxy, Phenyloxy, Diamino, Mercapto oder Halogen tragen, sowie Alkylreste mit mindestens 2 Kohlenstoffatomen, in denen gegebenenfalls ein Kohlenstoffatom durch Sauerstoff, Stickstoff oder Schwefel ersetzt ist oder Alkylreste mit mindestens 4 Kohlenstoffatomen, in denen gegebenenfalls ein oder zwei Kohlenstoffatome durch ein oder zwei gleiche oder unterschiedliche Atome aus der Gruppe Sauerstoff, Stickstoff oder Schwefel ersetzt sind oder C₃- bis C₁₂-Cycloalkylreste, die gegebenenfalls lineare oder weitere cyclische Alkylreste oder aromatische Reste und die Alkylreste cyclische Alkylreste oder aromatische Reste als Substituenten tragen, C₁- bis C₈-Alkoxy oder aromatische Substituenten, die gegebenenfalls durch C₁- bis C₁₈-Alkylreste, die gegebenenfalls C₁- bis C₈-Alkoxy, 1- oder 2-Naphthyloxy, Phenyloxy, Diamino, Mercapto oder Halogen tragen, sowie Alkylreste mit mindestens 2 Kohlenstoffatomen, in denen gegebenenfalls ein Kohlenstoffatom durch Sauerstoff, Stickstoff oder Schwefel ersetzt ist oder Alkylreste mit mindestens 4 Kohlenstoffatomen, in denen gegebenenfalls ein oder zwei Kohlenstoffatome durch ein oder zwei gleiche oder unterschiedliche Atome aus der Gruppe Sauerstoff, Stickstoff oder Schwefel ersetzt sind oder C₃- bis C₁₂-Cycloalkylreste, die gegebenenfalls lineare oder weitere cyclische Alkylreste oder aromatische Reste und die Alkylreste cyclische Alkylreste oder aromatische Reste als Substituenten tragen, die gegebenenfalls durch C₁- bis C₈-Alkoxy, 1- oder 2-Naphthyloxy, Phenyloxy, Diamino, Mercapto oder Halogen substituiert sind, bedeutet, mit Verbindungen der allgemeinen Formel

R¹OH III,

in der R¹ die oben genannte Bedeutung besitzt zu einer Mischung IV, dadurch gekennzeichnet, dass man
a) die Nachreaktion bei einer Temperatur von 50 bis 240°C und einem Druck von 0,001 bis 0,9 bar durchführt,
b) aus der Mischung IV die Verbindungen Ia von den Verbindungen

   PR²(OR¹)₂ Ib

   und gegebenenfalls den Verbindungen II abtrennt und
c) Verbindungen Ib und gegebenenfalls unumgesetzte Verbindungen II in die Synthesestufe zurückführt.

Die Umsetzung kann diskontinuierlich oder kontinuierlich, bevorzugt diskontinuierlich als Batch-Verfahren durchgeführt werden.

Bei diskontinuierlicher Batch-Fahrweise kann Verbindung III vorgelegt und Verbindung II zugegeben werden. Bevorzugt ist jedoch, Verbindung II vorzulegen und Verbindung III zuzugeben. Die Geschwindigkeit der Zugabe von III hängt davon ab, wie schnell der sich bildende Chlorwasserstoff entfernt werden kann.

Die Einsatzstoffe II und III können bei Temperaturen von 50 bis 240°C, bevorzugt 80 bis 210°C, besonders bevorzugt 120 bis 200°C und Umgebungsdruck umgesetzt werden. Das Zusammenführen der Reaktionspartner dauert im allgemeinen 0,5 bis 10 Stunden, bevorzugt 1 bis 5 Stunden.

Das Molverhältnis von Edukt II zu Edukt III beträgt in der Regel 1,5 zu 1, bevorzugt 1,3 zu 1, besonders bevorzugt 1 zu 1.

### • Nachreaktion

Nachdem die Reaktionspartner bei diskontinuierlicher Fahrweise zusammengeführt sind, schließt sich die Nachreaktion an. In dieser Zeit wird die Umsetzung vervollständigt. Dies erfolgt bei Temperaturen von 50 bis 240°C, bevorzugt 80 bis 210°C, besonders bevorzugt 120 bis 200°C und einem Druck von 0,001 bis 0,9 bar, bevorzugt 0,003 bis 0,5 bar, besonders bevorzugt 0,005 bis 0,4 bar.

Die Umsetzung wird so durchgeführt, dass während der gesamten Nachreaktionszeit, bevorzugt während eines Teils der Nachreaktionszeit oberhalb der Siedepunkte beider Edukte II und III und unterhalb der Siedepunkte der Reaktionsprodukte Ia und Ib gearbeitet wird. Dabei wird bevorzugt unter Rückfluss der Edukte II und III gearbeitet.

In einer besonders bevorzugten Ausführungsform des Verfahrens wird der Reaktionsdruck während der Nachreaktionszeit Schritt für Schritt abgesenkt, um das Sieden der Edukte II und III in Gang zu halten.

Durch diese Fahrweise kann ein Umsatz des Eduktes III von > 97 %, bevorzugt > 98 %, besonders bevorzugt > 99 % erreicht werden. Hierdurch wird die destillative Aufarbeitung des Reaktionsgemisches erleichtert, da es dann nur noch aus den Komponenten I a, Ib und gegebenenfalls II besteht. Außerdem findet bei der destillativen Aufarbeitung keine wesentliche HCI-Bildung mehr statt.

Das Reaktionsgemisch wird 0,5 bis 15 Stunden, bevorzugt eine bis 12 Stunden, besonders bevorzugt 1,5 bis 10 Stunden nachgerührt.

Den bei der Umsetzung entstehenden Halogenwasserstoff, der unter den Reaktionsbedingungen gasförmig anfällt, kann man vorteilhafterweise gasförmig abtrennen und neutralisieren oder an sich bekannten chemischen Verfahren als Einsatzstoff zuführen.

### • Aufarbeitung des Reaktionsaustrags

Aus dem erhaltenen Reaktionsaustrag wird bei destillativer Aufarbeitung zunächst nicht umgesetzte Verbindung II, dann das Zielprodukt Ia abdestilliert. Verbindung I b wird als Sumpfprodukt erhalten.

### • Rückführung von Verbindung Ib

Bei diskontinuierlicher Batch-Fahrweise, bei der die Synthese z. B. in einem Reaktionsgefäß mit aufgesetzter Kolonne durchgeführt werden kann, verbleibt Verbindung Ib als Hochsieder im Reaktionsgefäß. Verbindung II oder Gemische aus Verbindung II und Ia, weiterhin Verbindung III werden ergänzt. Die Umsetzung zur Herstellung von Verbindung I a unter Rückführung von Reaktionsprodukten kann unter gleichen Reaktionsbedingungen wie ausgehend von den Verbindungen II und III als Edukten durchgeführt werden.

Da sich die Verbindungen I b zurückführen lassen und zusätzliche Nebenprodukte nur in geringen Mengen entstehen, kann eine hohe Ausbeute an den Zielprodukten Ia erreicht werden.

Als organische Reste R1 und R2 in den Formeln I bis III eignen sich unabhängig voneinander vorteilhaft Alkylreste und insbesondere aromatische Reste.

Als Alkylreste eignen sich C₁- bis C₁₈-Alkyl, bevorzugt C₁- bis C₁₂-Alkyl, besonders bevorzugt C₁- bis C₈-Alkyl wie Methyl, Ethyl, n-Propyl, iso-Propyl, n-Butyl, iso-Butyl, sec.-Butyl, tert.-Butyl, n-Pentyl sowie isomere Pentyle, n-Hexyl sowie isomere Hexyle, oder C₃- bis C₁₂-Cycloalkyl, bevorzugt C₄- bis C₈-Cycloalkyl, besonders bevorzugt C₅- bis C₇-Cycloalkyl wie Cyclopentyl oder Cyclohexyl, wobei die cyclischen Alkylreste lineare oder weitere cyclische Alkylreste oder aromatische Reste und die Alkylreste cyclische Alkylreste oder aromatische Reste als Substituenten tragen können.

Diese Alkylreste können weitere funktionelle Gruppen tragen, wie C₁- bis C₈- Alkoxy, 1- oder 2-Naphthyloxy, Phenyloxy, Diamino, Mercapto oder Halogen wie Chlor, Brom oder Jod. Vorzugsweise tragen die Alkylreste keine funktionellen Gruppen.

In den Alkylresten mit mindestens 2 Kohlenstoffatomen, bevorzugt mit mindestens 3 Kohlenstoffatomen kann ein Kohlenstoffatom durch ein anderes Atom wie Sauerstoff, Stickstoff oder Schwefel substituiert sein. In den Alkylresten mit mindestens 4 Kohlenstoffatomen, bevorzugt mit mindestens 5 Kohlenstoffatomen können ein oder zwei Kohlenstoffatome durch ein oder zwei gleiche oder unterschiedliche Atome wie Sauerstoff, Stickstoff oder Schwefel substituiert sein. Vorzugsweise sind die Alkylreste nicht substituiert.

Als aromatische Reste eignen sich Heterocyclen, vorzugsweise Homocyclen, wie 1- und 2-Naphthyl, vorzugsweise Phenyl.

Diese aromatischen Reste können weitere funktionelle Gruppen tragen, wie C₁- bis C₈-Alkoxy, 1- oder 2-Naphthyloxy, Phenyloxy, Diamino, Mercapto oder Halogene, wie Chlor, Brom oder Jod.

Diese aromatischen Reste können Alkylreste tragen. Als Alkylreste eignen sich C₁- bis C₁₈-Alkyl, bevorzugt C₁- bis C₁₂-Alkyl, besonders bevorzugt C₁- bis C₈-Alkyl wie Methyl, Ethyl, n-Propyl, iso-Propyl, n-Butyl, iso-Butyl, sec.-Butyl, tert.-Butyl, n-Pentyl sowie isomere Pentyle, n-Hexyl sowie isomere Hexyle, oder C₃- bis C₁₂-Cycloalkyl, bevorzugt C₄- bis C₈-Cycloalkyl, besonders bevorzugt C₅- bis C₇-Cycloalkyl wie Cyclopentyl oder Cyclohexyl, wobei die cyclischen Alkylreste lineare oder weitere cyclische Alkylreste oder aromatische Reste und die Alkylreste cyclische Alkylreste oder aromatische Reste als Substituenten tragen können.

Diese Alkylreste können weitere funktionelle Gruppen tragen, wie C₁- bis C₈- Alkoxy, 1- oder 2-Naphthyloxy, Phenyloxy, Diamino, Mercapto oder Halogene, wie Chlor, Brom oder Jod. Vorzugsweise tragen die aromatischen Reste keine funktionellen Gruppen.

In den Alkylresten mit mindestens 2 Kohlenstoffatomen, bevorzugt mit mindestens 3 Kohlenstoffatomen kann ein Kohlenstoffatom durch ein anderes Atom wie Sauerstoff, Stickstoff oder Schwefel substituiert sein. In den Alkylresten mit mindestens 4 Kohlenstoffatomen, bevorzugt mit mindestens 5 Kohlenstoffatomen können ein oder zwei Kohlenstoffatome durch ein oder zwei gleiche oder unterschiedliche Atome wie Sauerstoff, Stickstoff oder Schwefel substituiert sein. Vorzugsweise sind die Alkylreste nicht substituiert.

Diese aromatischen Reste können aromatische Substituenten tragen.

Als aromatische Substituenten eignen sich Heterocyclen, vorzugsweise Homocyclen, wie 1- oder 2-Naphthyl, vorzugsweise Phenyl.

Diese aromatischen Substituenten können weitere funktionelle Gruppen tragen, wie C₁- bis C₈- Alkoxy, 1- oder 2-Naphthyloxy, Phenyloxy, Diamino, Mercapto oder Halogene, wie Chlor, Brom oder Jod. Vorzugsweise tragen die aromatischen Reste keine funktionellen Gruppen.

Diese aromatischen Substituenten können Alkylreste tragen. Als Alkylreste eignen sich C₁- bis C₁₈-Alkyl, bevorzugt C₁- bis C₁₂-Alkyl, besonders bevorzugt C₁- bis C₈-Alkyl wie Methyl, Ethyl, n-Propyl, iso-Propyl, n-Butyl, iso-Butyl, sec.-Butyl, tert.-Butyl, n-Pentyl sowie isomere Pentyle, n-Hexyl sowie isomere Hexyle, oder C₃- bis C₁₂-Cycloalkyl, bevorzugt C₄- bis C₈-Cycloalkyl, besonders bevorzugt C₅- bis C₇-Cycloalkyl wie Cyclopentyl oder Cyclohexyl, wobei die cyclischen Alkylreste lineare oder weitere cyclische Alkylreste oder aromatische Reste und die Alkylreste cyclische Alkylreste oder aromatische Reste als Substituenten tragen können.

Diese Alkylreste können weitere funktionelle Gruppen tragen, wie C₁- bis C₈- Alkoxy, 1-oder 2-Naphthyloxy, Phenyloxy, Diamino, Mercapto oder Halogene, wie Chlor, Brom oder Jod. Vorzugsweise tragen die aromatischen Reste keine funktionellen Gruppen.

In den Alkylresten mit mindestens 2 Kohlenstoffatomen, bevorzugt mit mindestens 3 Kohlenstoffatomen kann ein Kohlenstoffatom durch ein anderes Atom wie Sauerstoff, Stickstoff oder Schwefel substituiert sein. In den Alkylresten mit mindestens 4 Kohlenstoffatomen, bevorzugt mit mindestens 5 Kohlenstoffatomen können ein oder zwei Kohlenstoffatome durch ein oder zwei gleiche oder unterschiedliche Atome wie Sauerstoff, Stickstoff oder Schwefel substituiert sein. Vorzugsweise sind die Alkylreste nicht substituiert.

Setzt man als aromatischen Rest den Phenylrest ein, so kann der Phenylrest in o-, m-oder p-Stellung einen Alkylrest oder aromatischen Substituenten tragen.

Die Verbindung II kann als eine einzelne Verbindung oder als Mischung verschiedener Verbindungen, vorzugsweise als eine einzelne Verbindung, eingesetzt werden. Es können auch Gemische verschiedener gleich oder unterschiedlich halogensubstituierter Verbindungen des Typs II eingesetzt werden.

Besonders bevorzugte Verbindungen II sind Phenyldichlorphosphin, Ethyldichlorphosphin, Methyldichlorphosphin, p-Tolyldichlorphosphin, o-Tolyldichlorphosphin, m-Tolyldichlorphosphin, 1-Naphthyldichlorphosphin, 2-Naphthyldichlorphosphin, o-Anisyldichlorphosphin.

Die Verbindung III kann als eine einzelne Verbindung oder als Mischung verschiedener Verbindungen, vorzugsweise als eine einzelne Verbindung, eingesetzt werden.

Besonders bevorzugte Verbindungen III sind Phenol, ortho-Kresol, meta-Kresol, para-Kresol, ortho-Ethylphenol, meta-Ethylphenol, para-Ethylphenol, ortho-n-Propylphenol, meta-n-Propylphenol para-n-Propylphenol, ortho-Isopropylphenol, meta-Isopropy-Iphenol, para-Isopropylphenol, ortho-n-Butylphenol, meta-n-Butylphenol para-n-Butylphenol, ortho-Isobutylphenol, meta-Isobutylphenol, para-Isobutylphenol, ortho-sec.-Butylphenol, meta-sec.-Butylphenol, para-sec.-Butylphenol, ortho-tert.-Butylphenol, meta-tert.-Butylphenol, para-tert.-Butylphenol.

Die nach dem erfindungsgemäßen Verfahren erhältlichen Phosphorverbindungen des Typs I eignen sich beispielsweise zur Synthese von Flammschutzmitteln, Wirkstoffen und Homogenkatalysatoren.

### Beispiele

### Beispiel 1

### Synthese von Chlor-(2-tert.-Butylphenoxy)phenylphosphin (CPP) aus Dichlorphenylphosphin (DCPP) und 2-tert.-Butylphenol.

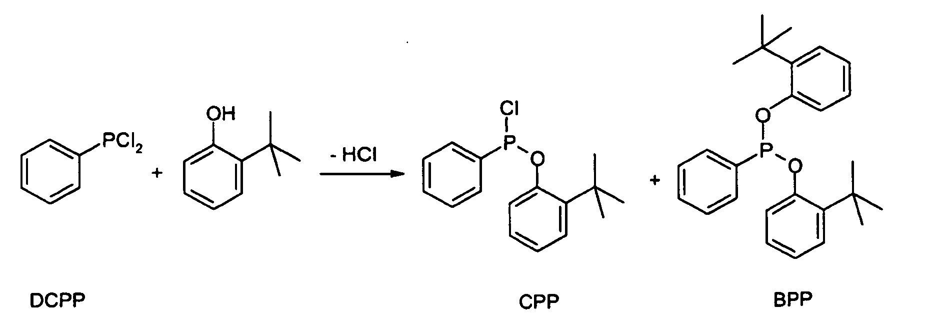

Die Umsetzung wurde in einem 500 ml Vierhalskolben mit Magnetrührer, Tropftrichter, Kühler, Blasenzähler und aufgesetzter Füllkörper-Kolonne (5 theoretische Böden) unter Argon durchgeführt.

Im Kolben wurden 179 g auf 150 °C erhitztes Dichlorphenylphosphin (1,0 mol) vorgelegt. Unter Rühren bei Normaldruck wurden 150 g 2-tert.-Butylphenol (1,0 mol) bei dieser Temperatur innerhalb von zwei Stunden zugetropft. Der entstehende Chlorwasserstoff wurde über einen Waschturm mit 15 %iger wässriger Natronlauge geleitet. Dann wurde eine Stunde bei 150 °C nachgerührt und eine Probe P1 aus dem Reaktor entnommen.

Dann wurde bei 150 °C Vakuum angelegt. Zunächst 50 mbar, wobei im Reaktionskolben Rückfluss einsetzte. Als der Rückfluss nachließ, wurde der Druck auf 30 mbar zurückgenommen. Insgesamt wurde das Reaktionsgemisch drei Stunden bei 150 °C im Vakuum gerührt. Aus dem Kolben wurde die Probe P2 entnommen.

Gaschromatogramme der Proben P1 und P2 ergaben, dass in der Probe P1 noch 8,3 Flächen-% 2-tert.-Butylphenol, in der Probe P2 nur noch weniger als 1 % 2-tert.-Butylphenol enthalten waren.

Die quantitative Analyse des Reaktionsaustrags (Probe P2) mit Hilfe von ³¹P-NMR ergab, dass die Ausbeute an Chlor-(2-tert.-Butylphenoxy)phenylphosphin (CPP) 69,4 % (bezogen auf eingesetztes DCPP) betrug. Die Ausbeute an zweifach aryliertem Produkt BPP betrug 14,6 % und an nicht umgesetztem Dichlorphenylphosphin 14,9 % (jeweils bezogen auf eingesetztes DCPP).

Das HCI-freie Reaktionsgemisch wurde destillativ aufgearbeitet. CPP und DCPP wurden im Vakuum schrittweise über die aufgesetzte Kolonne abdestilliert. Als Vorlauf wurden 22 g DCPP (12 %, bezogen auf eingesetztes DCPP) bei 184 °C/14 mbar erhalten. Als Zwischenlauf wurden 5 g eines Gemisches aus DCPP und CPP bei 184 - 195°C/5 mbar isoliert. Der Hauptlauf bestand aus 195 g CPP (67 %, bezogen auf eingesetztes DCPP), die bei 195 °C/2 mbar übergingen. Im Kolben blieben 57 g hochsiedendes BPP zurück.

### Vergleichsbeispiel

Die Umsetzung von DCPP mit 2-tert.-Butylphenol wurde bis zu dessen vollständiger Zugabe in den Reaktionskolben in gleicher Weise wie in Beispiel 1 durchgeführt. Dann wurde bei Umgebungsdruck ohne Rückfluss vier Stunden lang bei 150 °C gerührt. Anschließend wurde auf Raumtemperatur abgekühlt. Das Gaschromatogramm einer Probe des Reaktionsaustrags ergab, dass diese noch 7,5 Flächen-% 2-tert.-Butylphenol enthielt.

Die quantitative Analyse des Reaktionsaustrags mit Hilfe von ³¹P-NMR ergab, dass die Ausbeute an Chlor-(2-tert.-Butylphenoxy)phenylphosphin (CPP) 65 % (bezogen auf eingesetztes DCPP) betrug. Die Ausbeute an zweifach aryliertem Produkt betrug 6 % und an nicht umgesetztem Dichlorphenylphosphin 21 % (jeweils bezogen auf eingesetztes DCPP).

## Patentansprüche

1. Verfahren zur Herstellung von Verbindungen der allgemeinen Formel
XPR²(OR¹) Ia
wobei X Chlor, Brom oder Jod und R¹ einen C₁- bis C₁₈-Alkylrest, der gegebenenfalls C₁- bis C₈-Alkoxy, 1- oder 2-Naphthyloxy, Phenyloxy, Diamino, Mercapto oder Halogen trägt kann, sowie Alkylreste mit mindestens 2 Kohlenstoffatomen, in denen gegebenenfalls ein Kohlenstoffatom durch Sauerstoff, Stickstoff oder Schwefel ersetzt ist oder Alkylreste mit mindestens 4 Kohlenstoffatomen, in denen gegebenenfalls ein oder zwei Kohlenstoffatome durch ein oder zwei gleiche oder unterschiedliche Atome aus der Gruppe Sauerstoff, Stickstoff oder Schwefel ersetzt sind oder einen C₃- bis C₁₂-Cycloalkylrest, der gegebenenfalls lineare oder weitere cyclische Alkylreste oder aromatische Reste und die Alkylreste cyclische Alkylreste oder aromatische Reste als Substituenten tragen oder aromatische Reste aus der Gruppe der Heterocyclen und Homocyclen, die gegebenenfalls durch C₁- bis C₁₈-Alkylreste, die gegebenenfalls C₁- bis C₈-Alkoxy, 1- oder 2-Naphthyloxy, Phenyloxy, Diamino, Mercapto oder Halogen tragen, sowie Alkylreste mit mindestens 2 Kohlenstoffatomen, in denen gegebenenfalls ein Kohlenstoffatom durch Sauerstoff, Stickstoff oder Schwefel ersetzt ist oder Alkylreste mit mindestens 4 Kohlenstoffatomen, in denen gegebenenfalls ein oder zwei Kohlenstoffatome durch ein oder zwei gleiche oder unterschiedliche Atome aus der Gruppe Sauerstoff, Stickstoff oder Schwefel ersetzt sind oder C₃- bis C₁₂-Cycloalkylreste, die gegebenenfalls lineare oder weitere cyclische Alkylreste oder aromatische Reste und die Alkylreste cyclische Alkylreste oder aromatische Reste als Substituenten tragen, C₁- bis C₈-Alkoxy oder aromatische Substituenten, die gegebenenfalls durch C₁- bis C₁₈-Alkylreste, die gegebenenfalls C₁- bis C₈-Alkoxy, 1- oder 2-Naphthyloxy, Phenyloxy, Diamino, Mercapto oder Halogen tragen, sowie Alkylreste mit mindestens 2 Kohlenstoffatomen, in denen gegebenenfalls ein Kohlenstoffatom durch Sauerstoff, Stickstoff oder Schwefel ersetzt ist oder Alkylreste mit mindestens 4 Kohlenstoffatomen, in denen gegebenenfalls ein oder zwei Kohlenstoffatome durch ein oder zwei gleiche oder unterschiedliche Atome aus der Gruppe Sauerstoff, Stickstoff oder Schwefel ersetzt sind oder C₃- bis C₁₂-Cycloalkylreste, die gegebenenfalls lineare oder weitere cyclische Alkylreste oder aromatische Reste und die Alkylreste cyclische Alkylreste oder aromatische Reste als Substituenten tragen, die gegebenenfalls durch C₁- bis C₈-Alkoxy, 1- oder 2-Naphthyloxy, Phenyloxy, Diamino, Mercapto oder Halogen substituiert sind, bedeutet, durch Umsetzung von Verbindungen der allgemeinen Formel
X₂PR² II,
in der X die obengenannte Bedeutung besitzt und R² einen C₁- bis C₁₈-Alkylrest, der gegebenenfalls C₁- bis C₈-Alkoxy, 1- oder 2-Naphthyloxy, Phenyloxy, Diamino, Mercapto oder Halogen trägt kann, sowie Alkylreste mit mindestens 2 Kohlenstoffatomen, in denen gegebenenfalls ein Kohlenstoffatom durch Sauerstoff, Stickstoff oder Schwefel ersetzt ist oder Alkylreste mit mindestens 4 Kohlenstoffatomen, in denen gegebenenfalls ein oder zwei Kohlenstoffatome durch ein oder zwei gleiche oder unterschiedliche Atome aus der Gruppe Sauerstoff, Stickstoff oder Schwefel ersetzt sind oder einen C₃- bis C₁₂-Cycloalkylrest, der gegebenenfalls lineare oder weitere cyclische Alkylreste oder aromatische Reste und die Alkylreste cyclische Alkylreste oder aromatische Reste als Substituenten tragen oder aromatische Reste aus der Gruppe der Heterocyclen und Homocyclen, die gegebenenfalls durch C₁- bis C₁₈-Alkylreste, die gegebenenfalls C₁- bis C₈-Alkoxy, 1- oder 2-Naphthyloxy, Phenyloxy, Diamino, Mercapto oder Halogen tragen, sowie Alkylreste mit mindestens 2 Kohlenstoffatomen, in denen gegebenenfalls ein Kohlenstoffatom durch Sauerstoff, Stickstoff oder Schwefel ersetzt ist oder Alkylreste mit mindestens 4 Kohlenstoffatomen, in denen gegebenenfalls ein oder zwei Kohlenstoffatome durch ein oder zwei gleiche oder unterschiedliche Atome aus der Gruppe Sauerstoff, Stickstoff oder Schwefel ersetzt sind oder C₃- bis C₁₂-Cycloalkylreste, die gegebenenfalls lineare oder weitere cyclische Alkylreste oder aromatische Reste und die Alkylreste cyclische Alkylreste oder aromatische Reste als Substituenten tragen, C₁- bis C₈-Alkoxy oder aromatische Substituenten, die gegebenenfalls durch C₁- bis C₁₈-Alkylreste, die gegebenenfalls C₁- bis C₈-Alkoxy, 1- oder 2-Naphthyloxy, Phenyloxy, Diamino, Mercapto oder Halogen tragen, sowie Alkylreste mit mindestens 2 Kohlenstoffatomen, in denen gegebenenfalls ein Kohlenstoffatom durch Sauerstoff, Stickstoff oder Schwefel ersetzt ist oder Alkylreste mit mindestens 4 Kohlenstoffatomen, in denen gegebenenfalls ein oder zwei Kohlenstoffatome durch ein oder zwei gleiche oder unterschiedliche Atome aus der Gruppe Sauerstoff, Stickstoff oder Schwefel ersetzt sind oder C₃- bis C₁₂-Cycloalkylreste, die gegebenenfalls lineare oder weitere cyclische Alkylreste oder aromatische Reste und die Alkylreste cyclische Alkylreste oder aromatische Reste als Substituenten tragen, die gegebenenfalls durch C₁- bis C₈-Alkoxy, 1- oder 2-Naphthyloxy, Phenyloxy, Diamino, Mercapto oder Halogen substituiert sind, bedeutet, mit Verbindungen der allgemeinen Formel
R¹OH III,
in der R¹ die obengenannte Bedeutung besitzt, zu einer Mischung IV, **dadurch gekennzeichnet, dass** man
a) die Nachreaktion bei einer Temperatur von 50 bis 240 °C und einem Druck von 0,001 bis 0,9 bar durchführt,
b) aus der Mischung IV die Verbindungen Ia von den Verbindungen
PR²(OR¹)₂ Ib
und gegebenenfalls den Verbindungen II abtrennt und
c) Verbindungen Ib und gegebenenfalls unumgesetzte Verbindungen II in die Synthesestufe zurückführt.

2. Verfahren nach Anspruch 1, **dadurch gekennzeichnet, dass** man die Nachreaktion oberhalb der Siedepunkte der Verbindungen II und III unter Rückfluss eines Teils des Reaktionsgemisches durchführt.

3. Verfahren nach den Ansprüchen 1 und 2, **dadurch gekennzeichnet, dass** man die Nachreaktion unterhalb der Siedepunkte der Verbindungen Ia und Ib unter Rückfluss eines Teils des Reaktionsgemisches durchführt.

4. Verfahren nach den Ansprüchen 1 bis 3, **dadurch gekennzeichnet, dass** man als organische Reste R¹ und R² unabhängig voneinander C₁- bis C₁₈-Alkylreste und aromatische Reste verwendet.

5. Verfahren nach dem Anspruch 4, **dadurch gekennzeichnet, dass** R¹ und R² Phenyl- oder Naphthylreste bedeuten, die in o-, m- und/oder p-Stellung durch Alkyl- oder Alkoxygruppen substituiert sein können.

6. Verfahren nach den Ansprüchen 1, 4 und 5, **dadurch gekennzeichnet, dass** R¹ ortho-tert.-Butylphenyl bedeutet.

7. Verfahren nach Anspruch 1, **dadurch gekennzeichnet, dass** X Chlor bedeutet.

8. Verfahren nach den Ansprüchen 1 und 4 bis 6, **dadurch gekennzeichnet, dass** R² Phenyl bedeutet.

9. Verfahren nach den Ansprüchen 1 bis 8, **dadurch gekennzeichnet, dass** man die Umsetzung bei einer Temperatur von 120 bis 200°C durchführt.

10. Verfahren nach den Ansprüchen 1 bis 9, **dadurch gekennzeichnet, dass** man die Umsetzung bei einem Druck von 0,005 bis 0,4 bar durchführt.

## Claims

1. A method of producing compounds of the general formula
XPR²(OR¹) Ia
where X is chlorine, bromine or iodine and R¹ is a C₁- to C₁₈-alkyl radical, which can optionally carry C₁- to C₈-alkoxy, 1- or 2-naphthyloxy, phenyloxy, diamino, mercapto or halogen, and also alkyl radicals with at least 2 carbon atoms in which optionally one carbon atom is replaced by oxygen, nitrogen or sulfur, or alkyl radicals with at least 4 carbon atoms in which optionally one or two carbon atoms are replaced by one or two identical or different atoms from the group oxygen, nitrogen or sulfur, or a C₃- to C₁₂- cycloalkyl radical, which optionally carries linear or further cyclic alkyl radicals or aromatic radicals and the alkyl radicals carry cyclic alkyl radicals or aromatic radicals as substituents, or aromatic radicals from the group of heterocycles and homocycles which are optionally substituted by C₁- to C₁₈-alkyl radicals which optionally carry C₁-C₈-alkoxy, 1- or 2-naphthyloxy, phenyloxy, diamino, mercapto or halogen, and also alkyl radicals with at least 2 carbon atoms, in which optionally one carbon atom is replaced by oxygen, nitrogen or sulfur, or alkyl radicals with at least 4 carbon atoms in which optionally one or two carbon atoms are replaced by one or two identical or different atoms from the group oxygen, nitrogen or sulfur, or C₃- to C₁₂-cycloalkyl radicals which optionally carry linear or further cyclic alkyl radicals or aromatic radicals and the alkyl radicals carry cyclic alkyl radicals or aromatic radicals as substituents, C₁- to C₈-alkoxy or aromatic substituents which are optionally substituted by C₁- to C₁₈-alkyl radicals which optionally carry C₁-to C₈-alkoxy, 1- or 2-naphthyloxy, phenyloxy, diamino, mercapto or halogen, and also alkyl radicals with at least two carbon atoms in which optionally one carbon atom is replaced by oxygen, nitrogen or sulfur, or alkyl radicals with at least 4 carbon atoms in which optionally one or two carbon atoms are replaced by one or two identical or different atoms from the group oxygen, nitrogen or sulfur, or C₃- to C₁₂-cycloalkyl radicals, which optionally carry linear or further cyclic alkyl radicals or aromatic radicals and the alkyl radicals carry cyclic alkyl radicals or aromatic radicals as substituents, which are optionally substituted by C₁- to C₈-alkoxy, 1- or 2-naphthyloxy, phenyloxy, diamino, mercapto or halogen, by reacting compounds of the general formula
X₂PR² II,
in which X has the meaning given above and R² is a C₁- to C₁₈-alkyl radical, which can optionally carry C₁- to C₈-alkoxy, 1- or 2-naphthyloxy, phenyloxy, diamino, mercapto or halogen, and also alkyl radicals with at least 2 carbon atoms in which optionally one carbon atom is replaced by oxygen, nitrogen or sulfur, or alkyl radicals with at least 4 carbon atoms in which optionally one or two carbon atoms are replaced by one or two identical or different atoms from the group oxygen, nitrogen or sulfur, or a C₃- to C₁₂- cycloalkyl radical, which optionally carries linear or further cyclic alkyl radicals or aromatic radicals and the alkyl radicals carry cyclic alkyl radicals or aromatic radicals as substituents, or aromatic radicals from the group of heterocycles and homocycles which are optionally substituted by C₁- to C₁₈-alkyl radicals which optionally carry C₁-C₈-alkoxy, 1- or 2-naphthyloxy, phenyloxy, diamino, mercapto or halogen, and also alkyl radicals with at least 2 carbon atoms, in which optionally one carbon atom is replaced by oxygen, nitrogen or sulfur, or alkyl radicals with at least 4 carbon atoms in which optionally one or two carbon atoms are replaced by one or two identical or different atoms from the group oxygen, nitrogen or sulfur, or C₃- to C₁₂-cycloalkyl radicals which optionally carry linear or further cyclic alkyl radicals or aromatic radicals and the alkyl radicals carry cyclic alkyl radicals or aromatic radicals as substituents, C₁- to C₈-alkoxy or aromatic substituents which are optionally substituted by C₁- to C₁₈-alkyl radicals which optionally carry C₁-to C₈-alkoxy, 1- or 2-naphthyloxy, phenyloxy, diamino, mercapto or halogen, and also alkyl radicals with at least two carbon atoms in which optionally one carbon atom is replaced by oxygen, nitrogen or sulfur, or alkyl radicals with at least 4 carbon atoms in which optionally one or two carbon atoms are replaced by one or two identical or different atoms from the group oxygen, nitrogen or sulfur, or C₃- to C₁₂-cycloalkyl radicals, which optionally carry linear or further cyclic alkyl radicals or aromatic radicals and the alkyl radicals carry cyclic alkyl radicals or aromatic radicals as substituents, which are optionally substituted by C₁- to C₈-alkoxy, 1- or 2-naphthyloxy, phenyloxy, diamino, mercapto or halogen, with compounds of the general formula
R¹OH III,
in which R¹ has the meaning given above, to give a mixture IV, wherein
a) the postreaction is carried out at a temperature of from 50 to 240°C and a pressure of from 0.001 to 0.9 bar,
b) from the mixture IV the compounds I a are separated off from the compounds
PR²(OR¹)₂ Ib
and, optionally, the compounds II and
c) compounds I b and, optionally, unreacted compounds II are returned to the synthesis stage.

2. The method according to claim 1, wherein the postreaction is carried out above the boiling points of compounds II and III under reflux of some of the reaction mixture.

3. The method according to claims 1 and 2, wherein the postreaction is carried out below the boiling points of compounds I a and I b under reflux of some of the reaction mixture.

4. The method according to claims 1 to 3, wherein the organic radicals R¹ and R² used are, independently of one another, C₁- to C₁₈-alkyl radicals and aromatic radicals.

5. The method according to claim 4, wherein R¹ and R² are phenyl or naphthyl radicals which may be substituted in the o-, m- and/or p-position by alkyl or alkoxy groups.

6. The method according to claims 1, 4 and 5, wherein R¹ is ortho-tert-butylphenyl.

7. The method according to claim 1, wherein X is chlorine.

8. The method according to claims 1 and 4 to 6, wherein R² is phenyl.

9. The method according to claims 1 to 8, wherein the reaction is carried out at a temperature of from 120 to 200°C.

10. The method according to claims 1 to 9, wherein the reaction is carried out at a pressure of from 0.005 to 0.4 bar.

## Revendications

1. Procédé pour la préparation de composés de formule générale
XPR² (OR¹) Ia
où X signifie chlore, brome ou iode et R¹ signifie un radical C₁-C₁₈-alkyle, qui porte le cas échéant C₁-C₈-alcoxy, 1-naphtyloxy ou 2-naphtyloxy, phényloxy, diamino, mercapto ou halogène, ainsi que des radicaux alkyle comprenant au moins 2 atomes de carbone, dans lesquels le cas échéant un atome de carbone est remplacé par oxygène, azote ou soufre ou des radicaux alkyle comprenant au moins 4 atomes de carbone, dans lesquels le cas échéant un ou deux atomes de carbone sont remplacés par un ou deux atomes identiques ou différents du groupe formé par l'oxygène, l'azote ou le soufre ou un radical C₃-C₁₂-cycloalkyle, qui porte le cas échéant des radicaux alkyle linéaires ou d'autres radicaux alkyle cycliques ou des radicaux aromatiques et les radicaux alkyle portent des radicaux alkyle cycliques ou des radicaux aromatiques comme substituants ou des radicaux aromatiques du groupe des hétérocycles et des homocycles, qui sont le cas échéant substitués par des radicaux C₁-C₁₈-alkyle, qui portent le cas échéant C₁-C₈-alcoxy, 1-naphtyloxy ou 2-naphtyloxy, phényloxy, diamino, mercapto ou halogène, ainsi que par des radicaux alkyle comprenant au moins 2 atomes de carbone, dans lesquels le cas échéant un atome de carbone est remplacé par oxygène, azote ou soufre ou par des radicaux alkyle comprenant au moins 4 atomes de carbone, dans lesquels le cas échéant un ou deux atomes de carbone sont remplacés par un ou deux atomes identiques ou différents du groupe formé par l'oxygène, l'azote ou le soufre ou par des radicaux C₃-C₁₂-cycloalkyle, qui portent le cas échéant des radicaux alkyle linéaires ou d'autres radicaux alkyle cycliques ou des radicaux aromatiques et les radicaux alkyle portent des radicaux alkyle cycliques ou des radicaux aromatiques comme substituants, par C₁-C₈-alcoxy ou par des substituants aromatiques, qui sont le cas échéant substitués par des radicaux C₁-C₁₈-alkyle, qui portent le cas échéant C₁-C₈-alcoxy, 1-naphtyloxy ou 2-naphtyloxy, phényloxy, diamino, mercapto ou halogène, ainsi que par des radicaux alkyle comprenant au moins 2 atomes de carbone, dans lesquels le cas échéant un atome de carbone est remplacé par oxygène, azote ou soufre ou par des radicaux alkyle comprenant au moins 4 atomes de carbone, dans lesquels le cas échéant un ou deux atomes de carbone sont remplacés par un ou deux atomes identiques ou différents du groupe formé par l'oxygène, l'azote ou le soufre ou par des radicaux C₃-C₁₂-cycloalkyle, qui portent le cas échéant des radicaux alkyle linéaires ou d'autres radicaux alkyle cyclique ou des radicaux aromatiques et les radicaux alkyle portent des radicaux alkyle cycliques ou des radicaux aromatiques comme substituants, qui sont le cas échéant substitués par C₁-C₈-alcoxy, 1-naphtyloxy ou 2-naphtyloxy, phényloxy, diamino, mercapto ou halogène, par transformation de composés de formule générale
X₂PR² II,
où X présente la signification susmentionnée et R² signifie un radical C₁-C₁₈-alkyle, qui porte le cas échéant C₁-C₈-alcoxy, 1-naphtyloxy ou 2-naphtyloxy, phényloxy, diamino, mercapto ou halogène, ainsi que des radicaux alkyle comprenant au moins 2 atomes de carbone, dans lesquels le cas échéant un atome de carbone est remplacé par oxygène, azote ou soufre ou des radicaux alkyle comprenant au moins 4 atomes de carbone, dans lesquels le cas échéant un ou deux atomes de carbone sont remplacés par un ou deux atomes identiques ou différents du groupe formé par l'oxygène, l'azote ou le soufre ou un radical C₃-C₁₂-cycloalkyle, qui porte le cas échéant des radicaux alkyle linéaires ou d'autres radicaux alkyle cycliques ou des radicaux aromatiques et les radicaux alkyle portent des radicaux alkyle cycliques ou des radicaux aromatiques comme substituants ou des radicaux aromatiques du groupe des hétérocycles et des homocycles, qui sont le cas échéant substitués par des radicaux C₁-C₁₈-alkyle, qui portent le cas échéant C₁-C₈-alcoxy, 1-naphtyloxy ou 2-naphtyloxy, phényloxy, diamino, mercapto ou halogène, ainsi que par des radicaux alkyle comprenant au moins 2 atomes de carbone, dans lesquels le cas échéant un atome de carbone est remplacé par oxygène, azote ou soufre ou par des radicaux alkyle comprenant au moins 4 atomes de carbone, dans lesquels le cas échéant un ou deux atomes de carbone sont remplacés par un ou deux atomes identiques ou différents du groupe formé par l'oxygène, l'azote ou le soufre ou par des radicaux C₃-C₁₂-cycloalkyle, qui portent le cas échéant des radicaux alkyle linéaires ou d'autres radicaux alkyle cycliques ou des radicaux aromatiques et les radicaux alkyle portent des radicaux alkyle cycliques ou des radicaux aromatiques comme substituants, par C₁-C₈-alcoxy ou par des substituants aromatiques, qui sont le cas échéant substitués par des radicaux C₁-C₁₈-alkyle, qui portent le cas échéant C₁-C₈-alcoxy, 1-naphtyloxy ou 2-naphtyloxy, phényloxy, diamino, mercapto ou halogène, ainsi que par des radicaux alkyle comprenant au moins 2 atomes de carbone, dans lesquels le cas échéant un atome de carbone est remplacé par oxygène, azote ou soufre ou par des radicaux alkyle comprenant au moins 4 atomes de carbone, dans lesquels le cas échéant un ou deux atomes de carbone sont remplacés par un ou deux atomes identiques ou différents du groupe formé par l'oxygène, l'azote ou le soufre ou par des radicaux C₃-C₁₂-cycloalkyle, qui portent le cas échéant des radicaux alkyle linéaires ou d'autres radicaux alkyle cycliques ou des radicaux aromatiques et les radicaux alkyle portent des radicaux alkyle cycliques ou des radicaux aromatiques comme substituants, qui sont le cas échéant substitués par C₁-C₈-alcoxy, 1-naphtyloxy ou 2-naphtyloxy, phényloxy, diamino, mercapto ou halogène, avec des composés de formule générale
R¹OH III,
dans laquelle R¹ présente la signification susmentionnée, en un mélange IV, **caractérisé en ce qu'**on
a) réalise la post-réaction à une température de 50 à 240°C et une pression de 0,001 à 0,9 bar,
b) sépare du mélange IV les composés Ia des composants
PR²(OR¹)₂ Ib
et le cas échéant des composés II et
c) recycle les composés Ib et le cas échéant les composés II non transformés dans l'étape de synthèse.

2. Procédé selon la revendication 1, **caractérisé en ce qu'**on réalise la post-réaction au-dessus du point d'ébullition des composés II et III avec reflux d'une partie du mélange réactionnel.

3. Procédé selon les revendications 1 et 2, **caractérisé en ce qu'**on réalise la post-réaction sous le point d'ébullition des composés Ia et Ib avec reflux d'une partie du mélange réactionnel.

4. Procédé selon les revendications 1 à 3, **caractérisé en ce qu'**on utilise comme radicaux organiques R¹ et R², indépendamment l'un de l'autre, des radicaux C₁-C₁₈-alkyle et des radicaux aromatiques.

5. Procédé selon la revendication 4, **caractérisé en ce que** R¹ et R² signifient des radicaux phényle ou naphtyle qui peuvent être substitués en position o, m et/ou p par des groupes alkyle ou alcoxy.

6. Procédé selon les revendications 1, 4 et 5, **caractérisé en ce que** R¹ signifie ortho-tert-butylphényle.

7. Procédé selon la revendication 1, **caractérisé en ce que** X signifie chlore.

8. Procédé selon les revendications 1 et 4 à 6, **caractérisé en ce que** R² signifie phényle.

9. Procédé selon les revendications 1 à 8, **caractérisé en ce qu'**on réalise la transformation à une température de 120 à 200°C.

10. Procédé selon les revendications 1 à 9, **caractérisé en ce qu'**on réalise la transformation à une pression de 0,005 à 0,4 bar.
